(19) **Europäisches Patentamt European Patent Office Office européen des brevets**

(11) **EP 3 105 155 B1**

(12) **FASCICULE DE BREVET EUROPEEN**

(45) Date de publication et mention de la délivrance du brevet:
**29.03.2023 Bulletin 2023/13**

(21) Numéro de dépôt: **15703782.1**

(22) Date de dépôt: **11.02.2015**

(51) Classification Internationale des Brevets (IPC):
**B65G 23/36** (2006.01)    **B65G 47/96** (2006.01)
**G05B 19/418** (2006.01)

(52) Classification Coopérative des Brevets (CPC):
**B65G 23/36; B65G 47/96; G05B 19/4189;**
Y02P 90/02

(86) Numéro de dépôt international:
**PCT/EP2015/052882**

(87) Numéro de publication internationale:
**WO 2015/121306 (20.08.2015 Gazette 2015/33)**

(54) **PROCÉDÉ ET DISPOSITIF POUR L'ENTRAÎNEMENT DES TRIEURS DE COLIS POUR LES INSTALLATIONS AYANT DE FORTS CHANGEMENTS DE NIVEAUX**

VERFAHREN UND VORRICHTUNG ZUR ANSTEUERUNG EINES PAKETSORTIERERS FÜR ANLAGEN MIT EINRICHTUNGEN MIT ERHEBLICHEN HÖHENUNTERSCHIEDEN

METHOD AND DEVICE FOR DRIVING PARCEL SORTERS FOR INSTALLATIONS FACILITIES HAVING CONSIDERABLE CHANGES IN LEVELS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.02.2014 FR 1400380**

(43) Date de publication de la demande:
**21.12.2016 Bulletin 2016/51**

(73) Titulaire: **Fives Intralogistics S.p.A.**
**21015 Lonate Pozzolo (VA) (IT)**

(72) Inventeurs:
- **CHIEREGO, Lorenzo**
**I-21100 Varese (IT)**
- **SOLDAVINI, Attilio**
**- (IT)**

(74) Mandataire: **Casadei, Giovanni et al**
**Bugnion S.p.A.**
**Via Vellani Marchi, 20**
**41124 Modena (IT)**

(56) Documents cités:
**US-A1- 2008 234 858     US-A1- 2014 014 468**

## Description

L'invention est relative au domaine des équipements destinés au tri d'articles par l'intermédiaire de machines de tri, et plus particulièrement celles équipées de chariots à bande croisée, appelées cross-belt, ou de plateaux basculants, appelées tilt-tray.

Les machines à trier les colis et les paquets sont constituées de chariots reliés entre eux de manière articulée pour former un train qui circule en boucle sur un parcours constituant un circuit. En général la machine à trier occupe complètement le circuit sur lequel elle roule, et donc elle est elle-même aussi fermée en anneau, formant une chaîne où les maillons sont constitués des chariots, à intervalles réguliers. On utilise notamment ces machines à trier dans le secteur de la distribution, pour préparer les commandes destinées aux points de vente ou bien directement aux clients.

On les utilise également dans le secteur des postes et des courriers pour le tri des colis et des paquets, et ce sont les secteurs les plus intéressants pour la présente invention. En particulier celui des courriers express, en raison de la gamme plus vaste de produits traités, de la grande capacité requise avec des poids d'articles pouvant aller jusqu'à 50 kg et des vitesses de déplacement des chariots pouvant atteindre 3 m/s, et en raison des parcours longs et complexes des machines à trier.

Ces parcours des machines à trier sont nécessaires pour servir les portes de chargement et de déchargement des moyens de transport, et souvent aussi des surfaces de travail spécifiques, par exemple pour le contrôle aux rayons X des paquets ou pour les contrôles de douanes.

Les deux technologies les plus répandues pour les machines à trier sont la technologie cross-belt et la technologie tilt-tray. Chaque chariot est muni d'une unité de triage. Celle-ci est constituée d'un transporteur orthogonal au sens du mouvement de la machine dans le cas des machines à trier du type cross-belt. Elle prend la forme de plateaux basculants dans le cas des machines à trier du type tilt-tray.

Une machine à trier de type cross-belt est par exemple décrite dans le document US 2014/0014468, qui divulgue un système de tri selon le préambule de la revendication 1.

Le transporteur orthogonal est activé pendant la réception de l'objet à trier et pendant le triage à destination. Le plateau tilt-tray est chargé de l'objet à transporter, puis il bascule en correspondance avec la destination pour trier l'objet.

Le long du parcours sont présentes des stations pour le chargement automatique des objets à trier, et des dispositifs de collecte des objets triés, en général des goulottes à gravité pour accumuler les objets triés vers la même direction de façon à optimiser le travail en aval pour l'expédition.

Examinons ci-après brièvement, les raisons pour lesquelles sont souvent nécessaires des installations de machines à trier travaillant sur de forts changements de niveau, de l'ordre de 8 mètres ou plus, pour lesquelles la présente invention offre des solutions d'optimisation du dimensionnement en faveur de la durée de vie des composants et des coûts d'exploitation.

En général, les installations des équipements de triage prévoient des machines à trier sur un même plan, ou avec des changements de niveau de l'ordre de quelques mètres. Dans ces cas, le niveau de chargement est à une hauteur réduite, à environ 1 mètre du sol, pour des raisons ergonomiques liées à la présence des opérateurs qui chargent manuellement les objets à trier sur les stations automatiques, en les prélevant de cages ou de caisses.

Après les zones de chargement, la machine à trier monte en général jusqu'à environ 3 mètres du sol, fondamentalement pour deux raisons principales. La première, pour permettre aux transpalettes électriques utilisés pour le transport des paquets encombrants ou très lourds, qui ne peuvent pas être traités par la machine à trier, de traverser l'édifice. La deuxième raison est pour pouvoir utiliser de simples goulottes à gravité pour accumuler les paquets triés de manière à limiter la fréquence d'intervention des opérateurs, tout en optimisant le travail de préparation au chargement pour l'expédition, par exemple pour le chargement des paquets triés dans des cages destinées aux moyens de transport.

Il existe cependant des applications très importantes, par exemples dans les grandes plateformes de correspondances aéroportuaires des transporteurs express, où il faut avoir des machines à trier capables de surmonter de grandes dénivellations, de plus de 8 mètres, pour permettre des solutions adaptées aux exigences de différentes zones de travail et avec des étages superposés.

Dans ces installations mécanisées, il est nécessaire que la machine à trier assure des liaisons en hauteur sans nuire au mouvement au sol des containers embarqués (unités de chargement) pour décharger les paquets à trier et pour charger les paquets destinés aux vols. De plus, Elle ne doit pas nuire au mouvement des transpalettes pour la liaison entre les positions de déchargement et les positions d'embarquement pour les paquets lourds et encombrants non traitables par la machine à trier.

En outre, dans une installation de ce genre, il faut avoir différentes zones de travail spécialisées pour différentes tâches, que nous énumérons brièvement. Les zones d'inspection avec les machines à rayons X pour la sécurité : tous les paquets provenant des véhicules au sol et destinés au transport sur des avions doivent subir un contrôle fin avec des machines d'inspection aux rayons X à différents degrés. Pour cela la machine à trier offre des solutions de triage et de reprise.

Les zones d'inspection par rayons X pour les contrôles de douane, et les zones d'inspection douanière manuelle pour les paquets qui sont identifiés comme devant passer ce contrôle. En outre, il existe des zones de stockage temporaire et de reprise relatives aux paquets contenant des marchandises particulières pour lesquelles est nécessaire d'effectuer un contrôle spécialisé direct, ou pour lesquelles l'autorisation douanière n'est pas encore disponible. Dans ces cas, la machine à trier permet de dévier et distribuer les paquets identifiés dans les divers postes de travail, de les garer temporairement, et de reprendre automatiquement les paquets libérés.

Enfin on trouve également des zones de travail manuel pour la réparation de paquets ayant les étiquettes endommagées et illisibles, ou des paquets identifiés comme ayant des problèmes d'emballage ou soumis à des problèmes de stabilité et d'imprécision dans le chargement sur la machine à trier.

Toutes ces zones de travail ont besoin de grandes surfaces, pour l'accumulation des paquets et pour des exigences ergonomiques liées au travail des opérateurs. Pratiquement, pour ne pas entraver la manutention au sol, on utilise en général des mezzanines suspendues, et souvent sur plusieurs niveaux parallèles, l'un au-dessus de l'autre. Il est alors nécessaire que les différents niveaux soient servis par la même machine à trier pour trier et recharger les paquets, autrement il faudrait affronter des solutions très complexes.

Les machines de tri utilisées dans de telles conditions d'utilisation sont conçues autour d'éléments moteurs surdimensionnés pour faire face aux colis les plus lourds acceptables sur le parcours de la voie de roulement. Ce surdimensionnement est économiquement désavantageux car les éléments moteurs sont sous exploités la majeure partie du temps. Cela a également un coût énergétique non négligeable en raison de la consommation électrique des gros moteurs inadaptés.

Une des contraintes majeures des machines de tri actuelles ayant de forts dénivelés réside dans l'usure prématurée des organes de connexion entre les chariots mobiles. Les différentes contraintes physiques imposées par les changements de niveaux et le poids des articles transportés obligent les concepteurs à sur-dimensionner également les organes de connexion des chariots mobiles. Ce surdimensionnement des organes de connexions alourdit par la même les chariots ce qui contribue à sur-dimensionner un peu plus les moteurs d'entrainement de la chaine.

A titre d'exemple, on connaît du document US 2008/0234858 un système de convoyage d'article sur une voie de convoyage dans lequel certains des organes d'entraînement, disposés sur les portions planes du parcours, sont contrôlés avec ajustement du couple en fonction du poids du chargement et de l'angle de la pente ascendante ou descendante.

On retrouve avec ce type de système les inconvénients précités, à savoir la nécessité de surdimensionner les organes d'entraînement pour faire face aux colis les plus lourds acceptables sur le parcours de la voie de roulement, notamment sur les portions pentues.

En outre, dans ce type de configuration, l'ajustement du couple est lié à la vitesse d'entraînement de l'ensemble

La présente invention vise donc notamment à pallier les inconvénients précités, en proposant un équipement et un procédé permettant, dans les zones de pentes, de limiter les tensions et les compressions qui agissent et endommagent à terme les systèmes d'accroche entre les chariots mobiles. La présente invention se propose d'offrir des solutions permettant de manière optimisée de réaliser des machines à trier capables de surmonter de forts changements de niveau.

Ainsi, l'invention a pour objet, selon un premier aspect, un système de tri selon la revendication 1.

Pour réduire ou annuler les forces en compression ou traction agissant sur les chariots en correspondance des sections inclinées, la présente invention se propose d'ajouter le long des sections inclinées des unités de poussée dédiées pour appliquer des forces constantes sur les chariots, indépendamment de la vitesse du système de tri, pour annuler le poids des chariots sur les sections inclinées.

Dans le cas plus simple, la force appliquée aux chariots est fixe et fonction du poids nominal du chariot. On ne prend pas en compte le poids des paquets qui sont sur les chariots, en considérant que dans la majorité des applications le poids des articles est négligeable par rapport au poids du chariot.

Pour les applications avec des poids d'articles élevés et/ou des différences d'élévation très importantes, il peut être justifié de recourir à une solution plus complexe où le système de commande demande à chaque unité de poussée dédiée sur les sections inclinées, d'appliquer une valeur de force qui annule le poids effectif des chariots, qui sont à ce moment sur la partie en pente, et qui tient compte du poids des colis sur ces chariots.

Suivant certains modes de réalisation, le système de tri comprend en outre une ou plusieurs des caractéristiques suivantes, prise(s) isolément ou suivant toutes les combinaisons techniquement possibles :

- les unités de poussée dédiées sont contrôlées par le système de commande en sorte que la force délivrée soit ajustée selon l'inclinaison de la pente ;
- le système de tri dispose de moyens aptes à déterminer le poids des articles placés sur les chariots mobiles, et les unités de poussée dédiées sont contrôlées par le système de commande en sorte que la force délivrée soit fonction dudit poids ;
- les unités de poussée dédiées présentes sur une pente de la voie de roulement sont équipées d'un système de freinage à déclenchement électromagnétique ;
- les unités de poussée dédiées présentes sur une pente de la voie de roulement sont équipées de moteurs disposant d'un frein électromagnétique ;
- chaque unité de poussée dédiée est capable d'appliquer au chariot une force qui peut être déterminée individuellement par le système de contrôle.

L'invention a également pour objet, selon un deuxième aspect, un procédé pour la réduction de la tension ou de la compression agissant sur les chariots d'un système de tri d'articles présenté ci-dessus. Précisément, il s'agit d'un procédé de tri d'articles par le système présenté ci-dessus, dans lequel : le système de commande détermine la valeur de la force requise pour chaque unité de poussée dédiée présente sur une pente et contrôle unitairement ladite unité de poussée dédiée en sorte qu'elle délivre la force nécessaire pour réduire ou annuler la tension ou la compression au niveau des articulations due à l'inclinaison de la pente et aux poids des chariots et/ou des articles présents sur la pente,

Suivant certains modes de réalisation, le procédé comprend en outre une ou plusieurs des caractéristiques suivantes, prise(s) isolément ou suivant toutes les combinaisons techniques possibles :

- pour déterminer la valeur de la force requise à chaque unité de poussée dédiée présente sur une pente, on attribue à chaque article (7) un poids moyen, déterminé statistiquement ;
- pour déterminer la valeur de la force requise pour les unités de poussée dédiées, on prend en compte le poids réel des articles placés sur les chariots et déterminé par les moyens de détermination du poids de ces articles ;
- pour déterminer la valeur de la force requise pour les unités de poussée dédiées, on prend en compte l'inclinaison de la pente ;
- la force calculée par le système de commande est soit positive dans le cas d'une pente à inclinaison positive pour limiter la traction sur les articulations, soit négative dans une pente à inclinaison négative pour limiter la pression sur les articulations ;
- en cas d'arrêt de l'alimentation électrique des unités de poussée dédiées, l'activation du frein électromagnétique des unités de poussée dédiées placées sur une pente annule la tension ou la compression sur les articulations des chariots présents sur cette pente, empêchant ainsi les mouvements de la machine en avant ou en arrière en raison des charges déséquilibrées sur les chariots.

Les caractéristiques et avantages de l'invention apparaitront à la lecture de la description qui va suivre, donnée uniquement à titre d'exemple, et non limitative, en référence aux figures annexées suivantes :

- la figure 1 est une représentation schématique d'un système de tri de type cross-belt ;
- la figure 2 est une représentation schématique d'une zone de chargement ;
- la figure 3 est une représentation schématique de chariots mobiles de type cross-belt ;
- la figure 4 est une représentation schématique d'un système d'entrainement des chariots ;
- la figure 5 est une vue du dessous d'un système d'entrainement des chariots représenté en figure 4 ;
- la figure 6 représente schématiquement les forces en présence sur les chariots dans une pente ;
- la figure 7 représente un système d'accrochage des chariots ;
- la figure 8 est une vue partielle d'une voie de roulement en virage ;
- la figure 9 représente un système de commande raccordé aux unités de poussée ;
- la figure 10 est un graphique qui représente de manière synthétique un exemple de la tension rencontrée par un chariot le long du parcours de la machine à trier ;
- la figure 11 représente schématiquement les forces exercées sur les chariots sur une pente ascendante par les unités de poussée dédiées à annuler le poids des chariots selon un exemple de réalisation de l'invention ;
- la figure 12 représente schématiquement les forces exercées sur les chariots sur une pente descendante par les unités de poussée dédiées à annuler le poids des chariots selon le même exemple de réalisation de l'invention ;
- la figure 13 est une représentation d'une mise en oeuvre selon l'invention avec un premier type d'unités de poussée dédiées sans contact ;
- la figure 14 est une représentation d'une mise en oeuvre selon l'invention avec un second type d'unités de poussée dédiées sans contact ; elle comprend en partie supérieure une vue de dessous d'une partie de l'équipement et, en partie inférieure, une vue de dessus d'une partie de l'équipement.

Dans la description suivante, nous nous référons spécifiquement à une machine à trier du type cross-belt, mais la présente invention est également applicable à d'autres types de machines à trier, notamment celles du type tilt-tray.

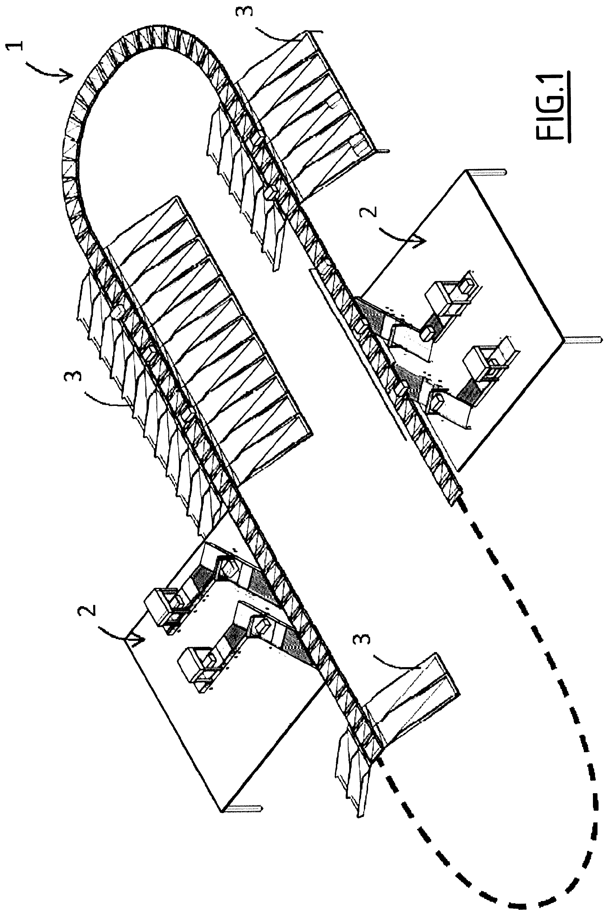

La figure 1 montre une partie d'une installation typique de triage du type cross-belt. Elle comprend la machine à trier 1, des stations de chargement automatiques 2 pour transférer les objets à trier à bord chariots à bandes orthogonales de la machine, et les goulottes de collecte 3 des objets triés aux diverses destinations.

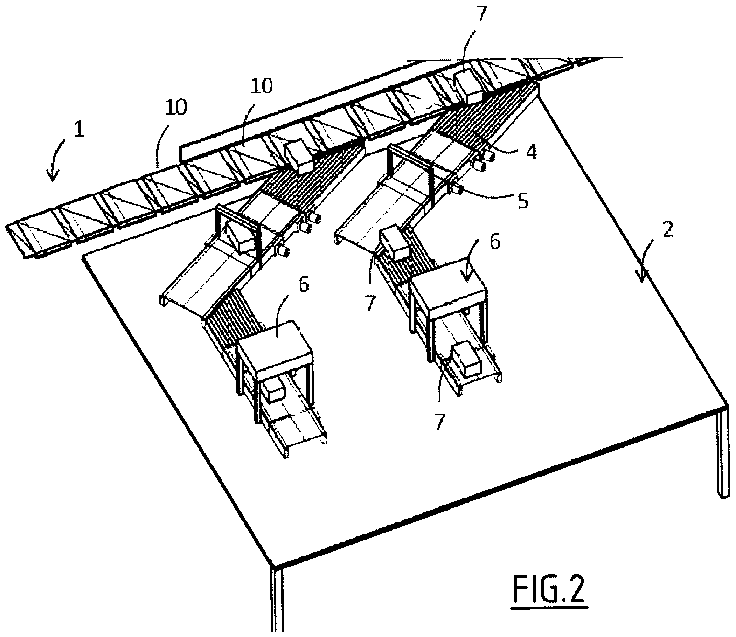

La figure 2 montre plus en détail un exemple de stations 2 de chargement automatique prévues pour orienter correctement et pour charger sur des chariots 10 les paquets 7 qui arrivent de lignes de déchargement non représentées. Les stations 2 sont constituées de bandes transporteuses indépendantes 4 contrôlées pour donner à chaque paquet 7 une trajectoire qui le mènera à se placer sur l'unité de triage 10 qui lui a été assignée, où il sera chargé en continuité de mouvement, sans subir de décélération soudaine. La trajectoire de chargement du paquet est déterminée en fonction des informations sur la position, la dimension et l'orientation du paquet obtenues grâce à une barrière de balayage optique 5.

En général, la station est munie d'un système pour identifier chaque paquet grâce à un tunnel 6 équipé de scanners laser, ou de caméras, pour relever l'étiquette d'adressage placée sur le paquet. Celle-ci comprend le code barres qui permet d'identifier chaque paquet et les opérations de triage qui en découlent. Très souvent le tunnel 6 comprend une bande transporteuse capable de déterminer le poids de l'objet 7 en transit et un système de mesure de son volume.

Le tunnel 6 et sa bande transporteuse notamment, forment donc un exemple de moyens permettant de déterminer le poids de l'objet 7 transporté.

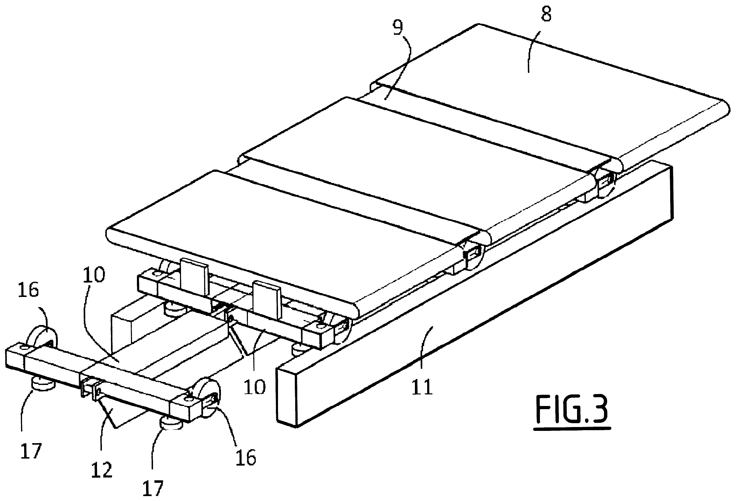

La figure 3 montre un exemple de tronçon d'une machine à trier cross-belt. Les chariots 10 roulent sur deux rails parallèles 11 grâce à des roues de support pivotantes 16, tandis que le côté interne des pistes 11 est utilisé par les roues de guidage latérales 17 pour le contrôle de la direction. Les chariots 10 sont dotés d'une lame verticale 12 pour recevoir la poussée d'unités d'entraînement, tels que des groupes motopropulseurs à friction distribués le long du parcours de la machine afin de la maintenir en mouvement à la vitesse de fonctionnement.

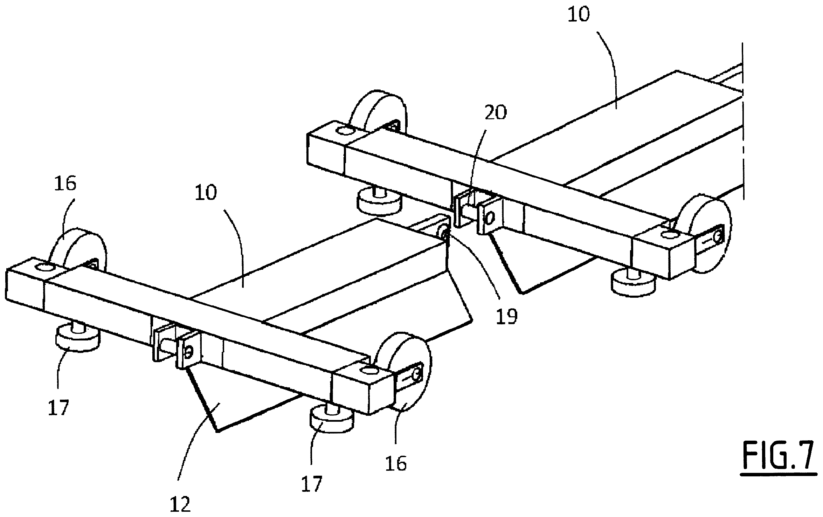

Les chariots sont reliés entre eux par un joint à articulation sphérique 19 et un gond 20, montrés sur la figure 7, qui permet le mouvement relatif entre les chariots dans toutes les directions. Ainsi, le train de chariots, équivalant à une chaîne à pas réguliers, peut exécuter des tournants sur le plan horizontal et sur le plan vertical, pour suivre des installations souvent très complexes et adaptées à l'édifice, avec des changements de hauteur.

Sur les chariots 10 sont installées des bandes 8 transporteuses orthogonales qui constituent des cellules de triage dotées d'un moteur individuel, avec la commande correspondante, prêt à recevoir les commandes d'activation et de contrôle de la vitesse du moteur provenant du système de contrôle central 22 de la machine à trier.

La bande 8 est activée pour recevoir de manière active les paquets en phase de chargement, pour exécuter d'éventuelles corrections du positionnement des paquets après le chargement pour améliorer la précision, et enfin pour trier les paquets arrivés à destination. Il est prévu, entre les cellules de triage, une planche de fermeture 9 qui pénètre dans le côté de la cellule adjacente de manière à offrir une surface fermée même dans les courbes du circuit, afin d'empêcher que des parties mobiles des articles 7 ne provoquent des interférences mécaniques dans les virages.

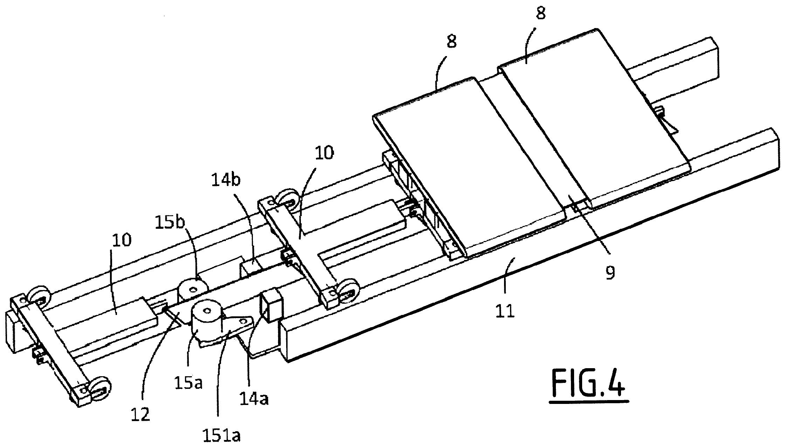

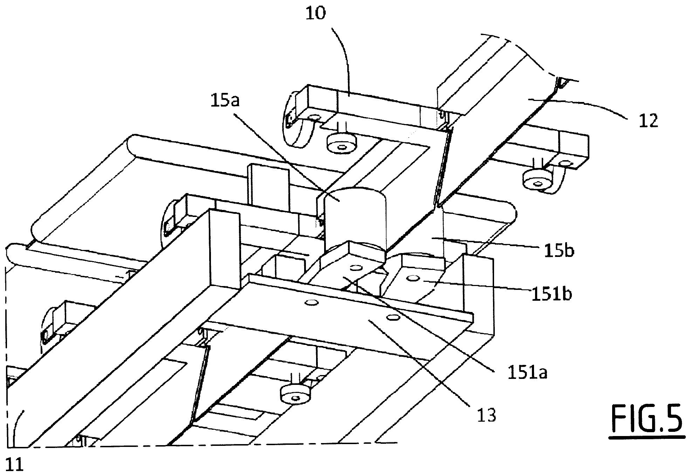

Comme illustré sur les figures 4 et 5, l'entraînement de la machine à trier est par exemple assuré par des unités d'entrainement à friction 13 situés le long du parcours de la machine, notamment suivant la technologie découlant de la solution du brevet EP1352859. L'unité d'entrainement 13 agit sur les lames verticales 12 des chariots 10 grâce à deux grandes roues en contre-rotation 15a et 15b opposées qui agissent des deux côtés de la lame 12 du chariot.

Les roues 15a et 15b sont pressées contre la lame 12 grâce à un ressort (non représenté). La pression exercée est suffisante pour assurer que les roues puissent pousser tangentiellement la lame 12 sans glissement à la valeur de couple maximale applicable. Chaque roue, 15a et 15b, est supportée par un bras articulé, 151a et 151b, indépendant, de façon que les deux roues 15a et 15b puissent s'adapter aux imperfections et aux défauts d'alignement des lames 12. En outre les roues 15a et 15b peuvent s'éloigner de la lame en cas de présence de parties de lame ou de lames déformées, en surmontant la réaction élastique. Cette solution rend extrêmement improbable le cas d'interférences mécaniques dangereuses pour le fonctionnement de la machine.

Comme le montre la figure 5, les roues 15a et 15b sont de grandes dimensions et de grande épaisseur, pour assurer le passage continu des lames 12 sans chocs et sans bruit. Grâce à la coupe oblique des lames 12 situées sous les chariots, la grande épaisseur de la roue permet que le passage des lames entre les roues se fasse sans discontinuité: lorsque l'extrémité postérieure d'une lame est sur le point de quitter le groupe de poussée, l'extrémité antérieure de la lame successive s'est déjà engagée entre les deux roues 15a et 15b.

Chaque roue, 15a et 15b, est activée par des courroies de transmission (non représentées) mues par un moteur, 14a et 14b, synchrone à haut rendement. Le système de contrôle central 22 contrôle le moteur en couple, indépendamment de la vitesse, en limitant le couple maximum à la valeur inférieure à la limite de dérapage déterminée par la charge élastique de la roue 15a et 15b sur la lame 12.

Les courroies de transmission permettent de fixer une autre limite de couple maximum, nécessaire dans la condition où il se produirait une défaillance mécanique au niveau du moteur ou de l'actionnement. Prenons par exemple le couple de freinage exercé par un moteur soumis à un blocage mécanique interne dû à la cassure d'un roulement. Même cette défaillance du moteur ne peut pas perturber le fonctionnement de la machine à trier, car les courroies de transmission du type à rainures parallèles sans dent permettent le glissement lorsque le couple dépasse la valeur limite définie par le pré-chargement.

Les groupes d'entraînement ou unités d'entrainement 13 sont répartis le long du parcours de la machine en nombre adéquat pour offrir une redondance, de sorte que le fonctionnement de la machine à trier soit totalement tolérant envers les défaillances possibles qui pourraient affecter les groupes d'entraînement.

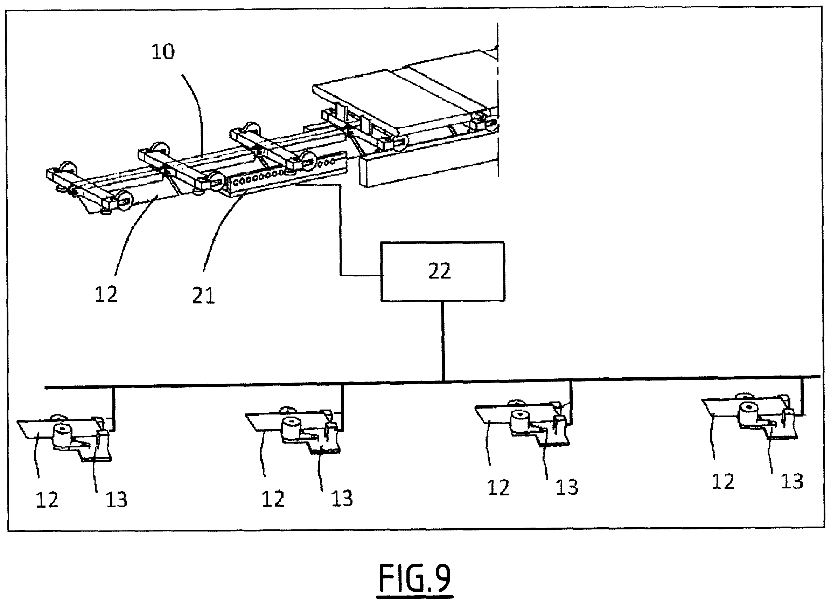

Comme représenté en figure 9, chaque actionnement est contrôlé directement par le système de contrôle central 22 de la machine à trier. Celui-ci exécute en mode centralisé une fonction de réglage automatique de la vitesse de la machine, en utilisant les signaux qui sont produits par une succession de photocellules 21 qui relèvent l'avancement des lames 12 des chariots 10, afin d'obtenir l'information de rétroaction de la vitesse instantanée effective de la machine.

Le contrôle centralisé de la vitesse est constitué d'un algorithme proportionnel, dérivé et intégral, exécuté cycliquement à intervalles de temps réguliers. Il fournit en sortie la commande de réglage correspondant à la valeur instantanée de couple requise, donc la poussée totale requise aux groupes d'entraînement. La commande de couple est communiquée aux actionneurs des moteurs d'entraînement dans un message avec adresse cycliquement transmise, via le réseau informatique industriel 23 pour le contrôle en temps réel des instruments, ou « fieldbus », par le système de contrôle 22. Le couple fourni par les moteurs, 14a, 14b, et donc la poussée sur les lames 12 des chariots est donc contrôlé par l'actionneur, en réglant le courant dans les bobinages.

En règle générale, la poussée totale requise est répartie à parts égales entre tous les groupes d'entraînement 13. Par conséquent, la même valeur instantanée de couple requise par l'algorithme de réglage est communiquée à tous les groupes d'entraînement 13, de façon que les valeurs de poussée distribuées tout le long de la machine soient égales, et qu'il ne se produise aucune accumulation de tension dans la chaîne constituant la machine à trier.

La présente invention exploite la possibilité du contrôle individuel de la valeur de poussée fournie par des unités de poussée dédiées 131 qui sont ajoutées le long des tronçons en pente P de la machine à trier, afin de pouvoir annuler partiellement ou complètement la valeur de la tension de la chaîne accumulée par les effets de la gravité qui agit sur les chariots 10 dans les tronçons en pente. Grâce à cette invention, il est ainsi possible de réaliser des machines à trier capables de surmonter de forts changements de niveau sans que cela ne doive entraîner de forts surdimensionnements et limiter la durée de vie des composants en raison des fortes contraintes alternées le long du parcours de la machine.

De forts changements de niveau entraînent des valeurs très élevées de la tension à l'intérieur de la chaîne articulée constituant la machine à trier. Les forces et les moments agissant entre les chariots sont déterminés par les valeurs de tension, et ils changent de valeur le long du parcours du niveau le plus haut au niveau le plus bas, en créant de fortes contraintes alternées qui influencent négativement la vie des composants, et qui devraient donc être évitées.

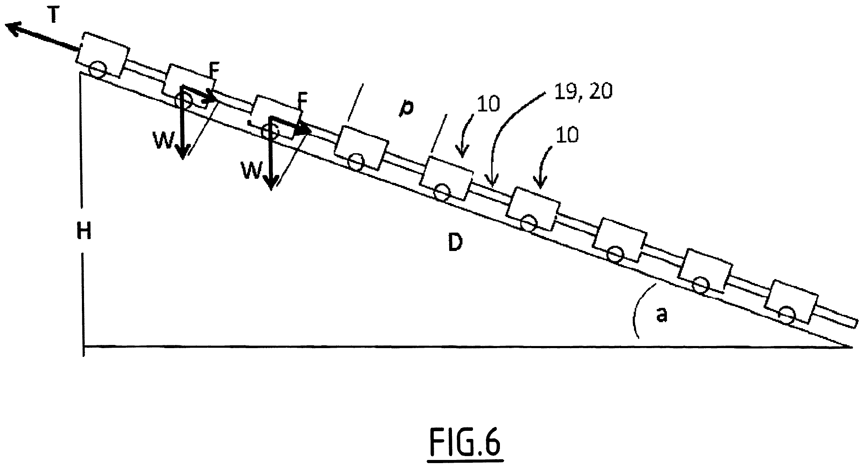

La figure 6 illustre la valeur de la tension T, ou de la compression T, agissant sur les organes de connexion entre les chariots 10 due au poids des chariots 10 situés le long d'un parcours en montée ou en descente. Par exemple, avec un changement de niveau d'une hauteur H de 8 mètres, si on considère un nombre N de chariots 10 présents sur la distance D ayant un pas p de 0,7 mètre et pesant un poids total W de 80 kg, dont le poids d'un paquet pesant 15 kg posé sur le chariot, une pente P d'un angle $\alpha$, et l'accélération gravitationnelle de g=9.81 m/s$^2$, la tension T prend la valeur de :

$$T = H \times \frac{W}{p} = 8 \times \frac{80 \times 9.81}{0.7} = 9140 \text{ N.}$$

La formule est la résultante du raisonnement suivant :

$$\mathrm{F} = \mathrm{W} . \sin \alpha$$

$T = N \times F$, où F est la valeur de la tension ou de la compression résultant d'un chariot,

$$N = \frac{D}{p}$$

$$D = \frac{H}{\sin \alpha}$$

donc

$$T = H \times \frac{W}{p}$$

Il s'agit de valeurs très élevées, qui impliquent un grand surdimensionnement des organes de connexion entre les chariots, et les inévitables inversions des forces agissant sur le chariot le long du parcours sont telles qu'elles entraînent une réduction de la durée de vie en fatiguant les composants.

Au contraire, dans le cas de parcours sans changement de niveau, la machine à trier est tendue à une valeur minimale suffisante pour ne pas permettre l'inversion des forces qui agissent entre les chariots en correspondance avec le passage sur les groupes d'entraînement 13.

Dans un cas pratique d'une machine à trier selon l'art antérieur, un groupe d'entraînement peut exercer une poussée maximum sur la lame du chariot égale à 1000 N. Par conséquent, la tension de la chaîne articulée est normalement prévue autour de 1000 N, en réglant adéquatement le pas entre les chariots, de sorte que la tension entre les chariots ne subisse pas d'inversion en correspondance avec le passage sur un groupe d'entraînement.

Il est évident que, en cas d'un changement de niveau de 8 mètres, les chariots de la machine à trier selon l'art antérieur rencontreraient des charges d'un ordre de grandeur plus élevé, et en outre de type alterné en traction et en compression. Dans certaines positions les éléments de connexion entre les chariots subiraient de forts moments de flexion alternés.

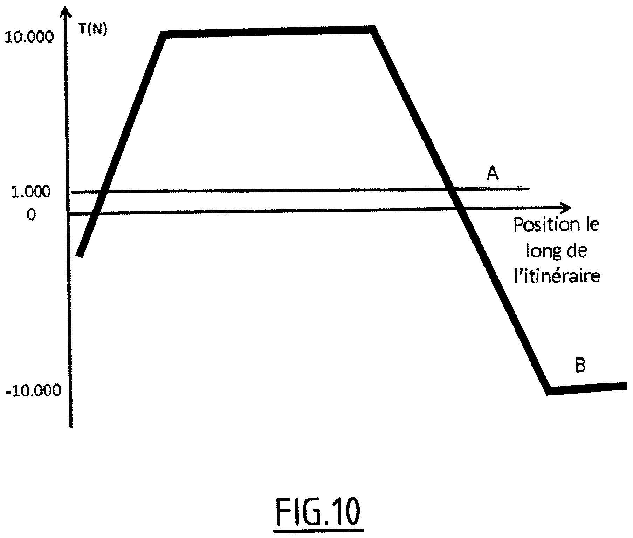

La figure 10 montre de manière synthétique un graphique qui fournit en ordonnées la valeur de la tension rencontrée par les organes de connexion d'un chariot le long du parcours de la machine à trier, mesuré en abscisses.

Elle montre la comparaison entre la tension A agissant sur le chariot dans une machine à trier roulant à plat et la tension B dans une machine où il y a des changements de niveau d'environ 8 m. Dans le cas de la machine à trier à plat, la tension A est indiquée comme constante. En réalité, il y a de brefs changements transitoires, avec des variations comprises dans un intervalle de 2000 N autour de la valeur de tension constante, qui ne sont pas indiquées sur le graphique et qui sont dues au passage sur les unités d'entrainement 13. On retrouve ce phénomène, à un niveau plus ou moins marqué, pour les unités d'entrainement placées sur des tronçons de circuit en pente.

Dans le cas d'une machine avec des changements de hauteur, lorsque le chariot parcourt le tronçon en montée, la tension B augmente progressivement à cause de la gravité qui agit sur les chariots qui suivent, jusqu'à une valeur maximale d'environ 10000 N, puis celle-ci reste presque constante. Le long du tronçon en descente, le chariot voit la tension se réduire puis prendre des valeurs négatives correspondant à la compression exercée par le poids des chariots en amont sur le tronçon en descente. Divers composants du chariot sont soumis à l'effet de fortes valeurs de tension.

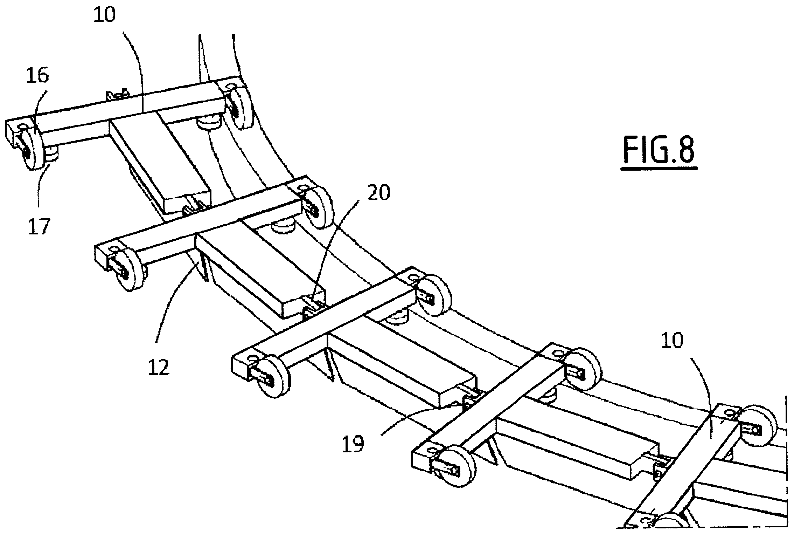

En correspondance avec les tournants à proximité des tronçons en montée ou en descente, comme le montre la figure 8, l'angle formé entre les chariots signifie que la tension provoque une composante de force latérale agissant de manière axiale sur l'articulation 19, 20 de la figure 7.

De fortes charges axiales alternées sur les articulations affectent la durée de vie de ces dernières, plus tolérantes envers de fortes charges radiales.

La force axiale est proportionnelle à la valeur de la tension, il est donc évident qu'on a intérêt à réduire la valeur totale de la tension agissant sur les articulations 19 et 20 des chariots.

En outre, comme le montre la figure 8, en correspondance avec les tournants les roues de guidage latérales 17 sont soumises à une compression contre le côté du rail 11 avec une valeur qui est proportionnelle à la tension. La compression de la roue 17 de guidage latérale en correspondance avec les tournants croît avec l'angle formé par la polygonale des chariots dans le tournant, et est proportionnelle à la valeur de tension. Selon le rayon de courbure utilisé par la machine, la compression de la roue 17 peut être égale à environ 25% de la valeur de tension. Si on considère le cas du chariot de la machine à trier de l'art antérieur cité précédemment, la roue de guidage latérale 17 serait soumise à une pression de 2500 N, valeur très élevée qui réduirait fortement la vie du revêtement et des roulements.

Les articulations 19, 20 de connexion entre les chariots sont eux aussi soumis à des moments de flexion alternés de valeur proportionnelle à la tension en correspondance avec les tournants.

De manière analogue, les roues pivotantes 16 de support sont soumises à une forte compression sur la piste ou contre le dispositif de retenue sur la piste, non montrée sur la figure, en correspondance avec les positions où la pente P change. Dans ce cas aussi, la valeur de compression est proportionnelle à la valeur de tension dans la chaîne. Vue la grande fréquence à laquelle les roues passent sur la piste, dans les positions où les pistes sont soumises à la forte compression exercée par les roues, elles sont soumises elles aussi à des problèmes de durée de vie en fatigue et aussi d'usure.

La présente invention permet des solutions pour annuler la tension provoquée par la gravité qui agit sur les chariots dans les tronçons en pente P. Avec ces solutions, il est donc possible de rapporter l'évolution de la tension, rencontrée par le chariot le long du parcours, d'une courbe B à une courbe A comme montré sur le graphique de la figure 10, quelle que soit la variation de niveau nécessaire pour la machine à trier

L'invention concerne les comportements aussi bien dynamiques que statiques de la machine. Dynamiquement, l'annulation de la tension et de ses effets pendant le mouvement de la machine, ou leur forte réduction, permet d'éviter des charges alternées qui réduisent la vie des composants.

En condition stationnaire, avec la machine à trier non alimentée, il est également possible d'éliminer la tension ou la compression sur les chariots de sorte qu'il ne soit pas nécessaire de sur-dimensionner ces organes pour les faire résister à des forces statiques importantes.

Par conséquent, pour réduire la valeur de la tension ou de la compression, la présente invention propose de disposer des unités de poussée dédiées 131 le long des tronçons en montée et en descente. Les unités de poussée dédiées 131 peuvent être du même type que les unités d'entrainement 13 utilisés pour l'entrainement de la machine et son contrôle automatique de vitesse. Elles sont dédiées et contrôlées en couple avec des valeurs en mesure d'exercer des forces capables d'annuler, ou de réduire fortement, la force de poids agissant sur les chariots, et donc la tension ou la compression sur les organes de connexion entre les chariots. Ces unités de poussée dédiées 131 sont aptes à pousser les chariots en exerçant une force contrôlable, indépendante de la vitesse de la machine. La réduction de la tension permet de manière non limitative d'éviter les surdimensionnements des chariots et des organes de connexion ainsi que de diminuer les contraintes agissant sur les roues et sur les articulations. Elle empêche la production de charges et de moments de flexion alternés qui influencent négativement la durée de vie en fatigue des composants du chariot 10.

Grâce à la possibilité de contrôler un par un les actionnements des moteurs, il est possible d'obtenir des forces constantes agissant sur les lames 12 des chariots 10 de façon à s'opposer aux effets de la force de poids. Ainsi, on peut distribuer plusieurs groupes de poussée dédiés 131 en montée et en descente, chacun pour annuler la composante de la force F de poids relative à un groupe de chariots. Il est nécessaire que chaque groupe de poussée dédiés 131 puisse exercer une force contrôlée indépendante de la vitesse de la machine. En effet, il faut compenser les composantes de la force de poids, qui ne dépendent pas de la vitesse de la machine, également pendant le temps transitoire de démarrage de la machine lorsque la vitesse de la machine croît avec une accélération constante. En outre il est évident que, dans les tronçons en descente, pour compenser la force de poids, la force exercée par les groupes de poussée devra avoir la même direction, mais dans le sens contraire à celle de la vitesse de la machine, tandis que dans les tronçons en montée, la force nécessaire a les mêmes directions et sens.

Pour déterminer la valeur de poussée R requise pour chaque groupe, on peut utiliser la valeur moyenne du poids d'un chariot en le considérant chargé d'un paquet de poids moyen égal à 15 kg. De cette manière, il ne sera pas possible, en général, d'annuler totalement la valeur de tension ou de la compression, vu la casualité de chargement des chariots. Cependant, la valeur totale de tension résiduelle sera drastiquement réduite. Le poids moyen des articles peut être donné suite à une étude statistique des flux d'articles 7 lors de l'exploitation de l'installation étudiée. L'exploitant de l'installation peut également considérer une répartition des poids de colis pour calculer le poids moyen d'un colis. Le poids moyen des articles 7 peut également être déterminé en temps réel en comptabilisant le poids des articles présents à un instant t sur la voie de roulement 1. Le poids de chaque article est donné par la bande peseuse du tunnel 6. En cas d'absence d'une fonction de pesage, le tunnel 6 peut être prévu pour capter optiquement le poids déclaré et indiqué sur les articles, ou encore, obtenir cette information d'une base de données après identification des articles.

En revanche, l'invention permet d'annuler totalement la valeur de tension ou de la compression en modulant la poussée des groupes de poussée dédiés 131 en fonction d'un algorithme connaissant le poids effectif de chaque chariot 10 présent dans le tronçon en pente P. Il est déjà très courant, dans les applications de triage des paquets, que le poids de chaque objet 7 chargé sur la machine à trier soit déterminé en phase de chargement et en particulier lors du passage sur les bandes peseuses au niveau du tunnel 6.

Dans la mesure où le poids de l'objet éventuellement présent sur le chariot est connu, le système de contrôle 22 de la machine à trier connaît à chaque instant la position de chaque chariot en correspondance avec les tronçons en pente P et aussi le poids effectif de chaque chariot 10.

Il est ainsi possible de calculer la valeur de la force R requise pour chaque groupe d'entraînement situé dans le tronçon en pente P nécessaire pour annuler totalement la valeur de tension ou la compression due à l'effet de la gravité agissant sur les chariots, même dans les situations peu probables où beaucoup de paquets lourds se trouveraient sur les chariots du même tronçon de parcours en pente. Dans ce cas, la tension ou la compression est constante quelle que soit le changement de niveau demandé à la machine à trier. Sa représentation sur le diagramme de la Fig. 6 serait identique à celui de la tension A correspondant à un circuit horizontal.

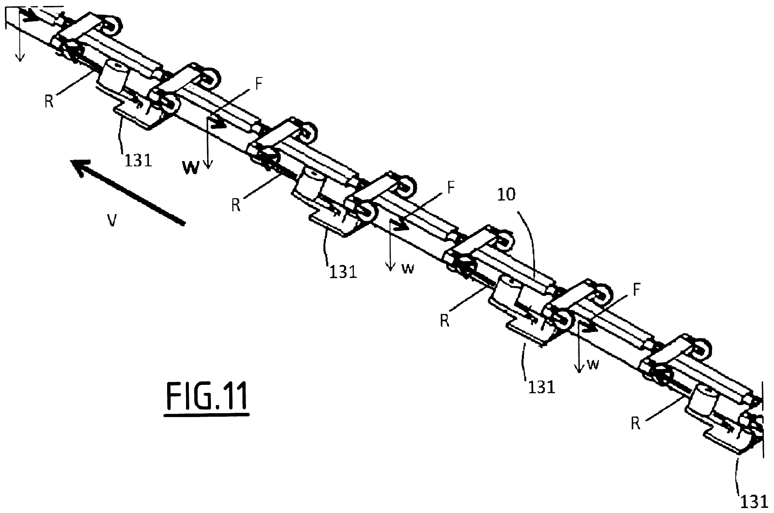

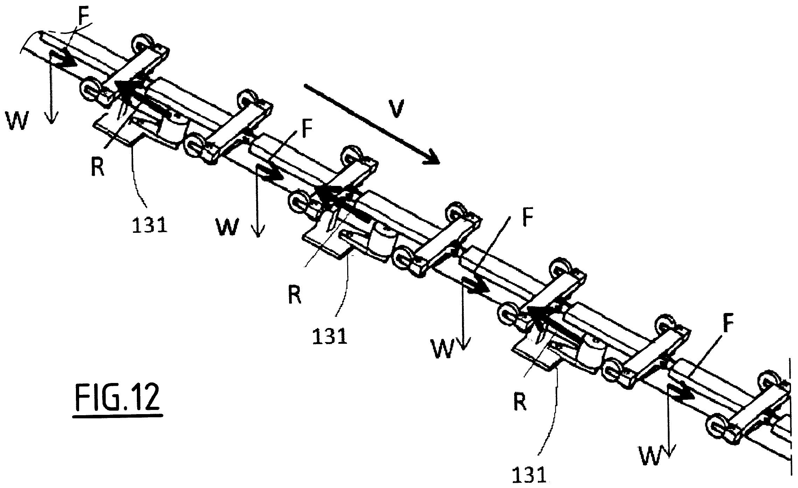

Les figures 11 et 12 montrent l'implémentation de la solution. Sur la figure 11, qui représente un tronçon en montée, les unités de poussée dédiées 131 reçoivent une commande de couple qui engendre une poussée correspondant à une force R complémentaire dans la même direction et dans le même sens que le mouvement de la machine, de façon à annuler les composantes parallèles au plan incliné et engendrées par la force de poids W agissant sur les groupes de chariots 10. La figure 12 représente un tronçon en descente. Dans ce cas, les unités de poussée dédiées 131 reçoivent une commande de couple qui engendre une poussée opposée au sens de marche de la machine à trier, telle qu'elle annule les composantes de la force de poids le long du plan incliné. Cela est possible, comme déjà dit, lorsque les moteurs des groupes de poussée dédiés 131 sont contrôlés en couple, indépendamment de la vitesse et du sens de rotation.

L'exemple non limitatif ci-après permettra de mieux saisir les différentes forces en présences représentées sur les figures 11 et 12. Une machine de tri ayant un changement de niveau de 8m avec une pente de 12° fait circuler 48 chariots mobiles 10 distants d'un pas de 0.8m sur la pente qui est de 38.4m de long. Le poids de chaque chariot 10 est de 85kg incluant le poids moyen de l'article 7 transporté. Suivant la formule précédemment évoquée $F = W \cdot \sin \alpha$, la force F de chaque chariot est égale à 17.6kg. La tension générée en haut de la pente serait égale à $17.6 \times 48$ chariots = 845kg, en l'absence de l'invention.

Dans une mise en oeuvre de l'invention dans l'exemple ci-dessus, nous choisissons d'installer 24 unités de poussée dédiées 131 dans la pente. Ainsi, chaque unité de poussée dédiée 131 a à gérer le poids de 2 chariots 10 situés sur la pente, comme représenté en figure 11 et 12. Dans cet exemple de réalisation, il n'y a pas d'unités d'entrainement 13 implantées dans la pente car celles-ci ne sont pas nécessaires pour assurer l'entrainement des chariots 10. En effet, dans cet exemple, les unités d'entrainement 13 placées en amont et en aval de la pente suffisent à assurer l'entrainement des chariots 10. Le ratio du nombre des chariots 10 sur le nombre d'unités de poussée dédiées 131 n'est pas limitatif et peut être modifié en fonction des contraintes techniques supportées par les unités de poussée dédiées 131, Assumant pour l'exemple que le poids des chariots 10 est constant, chaque unités de poussée dédiées 131 devra générer une force R de 2x17.6kg soit 35.2kg pour compenser les tensions dues par la gravité. Dans cet exemple, avec un cas pratique d'unité de poussée dédiée 131, de même type que l'unité d'entrainement 13, capable de produire une force maximum de 100kg, on pourrait seulement utiliser 9 unités de poussée dédiées. Cependant, dans ce cas la contrainte exercée sur les articulations 19, 20 de connexion entre les chariots serait plus importante car chaque unité de poussée dédiée agira sur un ensemble de cinq chariots au lieu de deux. Dans le cas d'une connaissance exact du poids de chaque chariot, la force R délivrée par les unités de poussée dédiées 131, pour annuler la tension totale, est ajustée dynamiquement.

Dans le cas d'une descente avec des paramètres symétriques aux paramètres ci-dessus, illustrée par la figure 12, chaque unité de poussée dédiée 131 dans la pente développe une force R qui compense la somme des forces de gravités appliquées aux chariots pris en charge par cette unité de poussée. Dans l'exemple de la figure 12, cette force R est égale à 2xF avec l'hypothèse que F est constante quel que soit le chariot 10. Dans ce cas, la force R est générée à l'opposée de la direction de la voie de roulement 1. Les unités de poussée dédiées 131 sont capables de générer cette force R, demandée par le système de contrôle 22, indépendamment de la vitesse et du sens de roulement de la machine de tri.

On a considéré jusqu'à présent le comportement dynamique, c'est-à-dire l'annulation de la tension provoquée par la gravité pendant le mouvement et le fonctionnement de la machine à trier par les groupes de poussée dédiés convenablement disposés et contrôlés.

Considérons maintenant la solution pour l'aspect stationnaire, lorsque la machine à trier est arrêtée et qu'il n'y a pas d'alimentation électrique, ou bien avec la machine en mouvement lorsque se produit l'interruption soudaine de l'alimentation électrique à cause de l'intervention des circuits d'urgence ou à cause de problèmes de distribution d'électricité.

En cas d'absence d'alimentation électrique, les actionnements des groupes de poussée dédiés 131 ne sont plus en mesure d'exercer les forces nécessaires pour annuler la tension comme exposé précédemment. Il y aurait donc dans ce cas une valeur de tension maximale déterminée par la gravité agissant sur les chariots comme charge statique. En outre, en cas de chargements fortement déséquilibrés, lorsque la machine à trier s'arrête en urgence dans la condition où il y a beaucoup de paquets lourds sur les chariots dans le tronçon en montée, il se produit de fortes contraintes sur les groupes pivotants des roues 16 de support, dues à la tendance de la machine à trier à aller en arrière.

Donc, même si l'on avait résolu le cas dynamique, le cas stationnaire demanderait de toute façon un surdimensionnement des chariots 10 et des composants correspondants pour pouvoir résister aux charges statiques influencées par la gravité.

L'invention permet d'éliminer aussi la tension stationnaire due à la gravité, également dans le cas où le système de tri n'est plus alimenté électriquement. La solution proposée par la présente invention prévoit que les moteurs des groupes de poussée dédiés 131 situés sur les tronçons en pente soient équipés de freins électromagnétiques activés en désexcitation.

Ces freins sont couramment disponibles en tant qu'accessoires des moteurs. Ils prennent essentiellement la forme d'un disque de freinage par friction, qui est maintenu séparé du rotor du moteur par un solénoïde où passe un courant électrique. En cas de chute de la tension d'alimentation des actionneurs, le solénoïde ne s'oppose plus à la force exercée par un élément élastique qui presse le disque de freinage contre le rotor. Quand on freine les moteurs, il se crée des forces de frottement qui agissent sur les lames des chariots, qui sont supérieures aux forces produites par les moteurs dans la phase active, et qui sont toujours de direction et de sens contraires au mouvement de la machine, et propres à compenser totalement les composantes de la gravité agissant sur les chariots 10, ce qui annule donc la valeur de tension.

En utilisant des configurations standards des bandes transporteurs de type cross-belt, l'inclinaison limite des pentes est généralement d'environ 12° en raison de la stabilité des objets transportés. Cette inclinaison maximum pourra être dépassée en ajoutant des moyens de stabilisation des articles transportés.

En supposant que le poids exact de chaque article 7 chargé sur les chariots 10 est connu et est utilisé, selon l'invention, pour compenser entièrement la tension ou la compression, il n'y a alors pas de hauteur limite acceptable pour la bande de roulement 1. En revanche, dans le cas où le poids n'est pas exactement connu et un poids moyen est utilisé pour déterminer la force R compensant la tension ou la compression, il y aura une hauteur théorique maximum qui sera liée à la différence entre les poids réels des articles et leurs poids estimés et aux caractéristiques générales de la machine, notamment la résistance mécanique des organes de liaison entre les chariots. Prenons l'exemple d'un poids moyen d'article de 15kg et d'un poids maximum d'article de 50kg. En pratique, la hauteur maximum atteignable, et déjà conséquente, sera d'environ 16 m si on se place dans le pire cas où tous les articles 7 présents sur la pente ont un poids de 50kg, compte tenu des caractéristiques techniques d'un chariot typique d'une machine de tri d'articles de type cross-belt.

La description ci-dessus des solutions relatives à la présente invention se réfère à des machines à trier de type cross-belt ou tilt-tray ou à d'autres machines assimilables, constituées d'une chaîne où les maillons sont des chariots 10 avec les groupes d'entraînement 13 correspondants basés sur des roues articulées à friction. Naturellement, cette solution s'applique également à d'autres machines à trier avec d'autres types d'entraînements, pourvu que ces derniers soient distribuables le long du parcours de la machine à trier et permettent de pouvoir exercer des forces de propulsion ou de freinage directement contrôlables. Différentes technologies sont disponibles, telles que des technologies linéaire sans contact à induction, linéaire sans contact synchrone, tout en conservant la possibilité que la poussée de chaque groupe puisse être contrôlée indépendamment de la vitesse de la machine à trier.

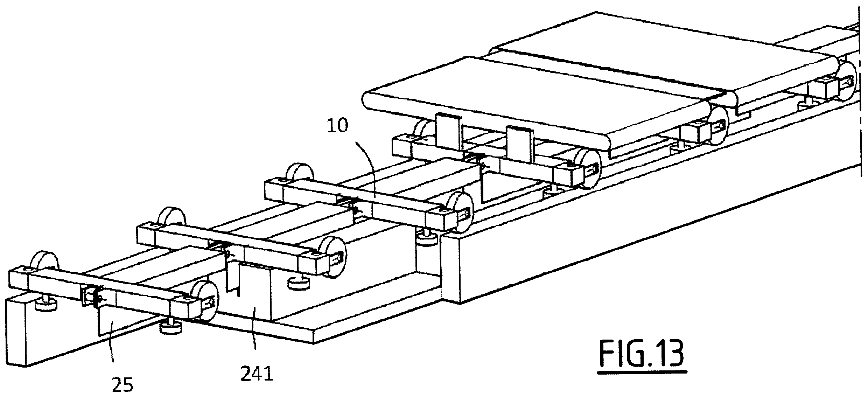

On peut utiliser par exemple des groupes propulseurs à induction magnétique, montrés sur la figure 13, capables de pousser sans contact des lames 25 verticales en aluminium situées sous les chariots. Dans la version la plus courante avec stators opposés 241, la lame 25 située sous les chariots passe dans une cavité étroite entre les stators. Les stators sont alimentés par une tension alternée triphasée, et les bobinages de stator sont reliés de façon que la tension triphasée produise un champ magnétique migrant le long de la direction du mouvement de la machine. Le champ magnétique, qui traverse la lame 25 à une vitesse supérieure à celle de la lame 25, y induit des courants qui créent des pôles magnétiques secondaires, de façon que les lames 25 des chariots 10 soient entraînées par le champ magnétique migrant du stator 241, pour s'opposer aux variations du flux magnétique dans les parcours conducteurs des lames.

De cette façon, pendant que les lames 25 des chariots 10 passent dans la cavité des stators 241, elles sont soumises à une force de propulsion dont on peut régler la valeur en variant la fréquence de la tension triphasée dans les stators, pour varier la différence entre la vitesse du champ magnétique migrant et la vitesse des lames 25 des chariots 10.

Donc, en utilisant de tels groupe propulseurs, il est possible d'utiliser la solution selon l'invention, de manière analogue à ce qui a été décrit précédemment, pour contrôler individuellement les groupes d'entraînement, et des unités de poussée dédiées 241, et obtenir des valeurs de poussée variables comme cela est requis pour régler la vitesse de la machine à trier, ou bien des valeurs de poussée constantes, en correspondance avec les groupes installés le long des parcours en pente, pour engendrer des forces qui s'opposent aux composantes des forces de gravité qui agissent sur les chariots 10, de façon à annuler la valeur de tension ou de la compression dans la chaîne constituée par les chariots 10.

Dans le même but, on peut utiliser d'autres types de propulseurs à induction qui ont été introduits récemment sur le marché, qui diffèrent des types précédents par leur plus grande efficacité, car le champ magnétique migrant est engendré directement par la rotation de deux plaques munies de pôles magnétiques alternés entre lesquelles passent les lames 25 conductrices des chariots.

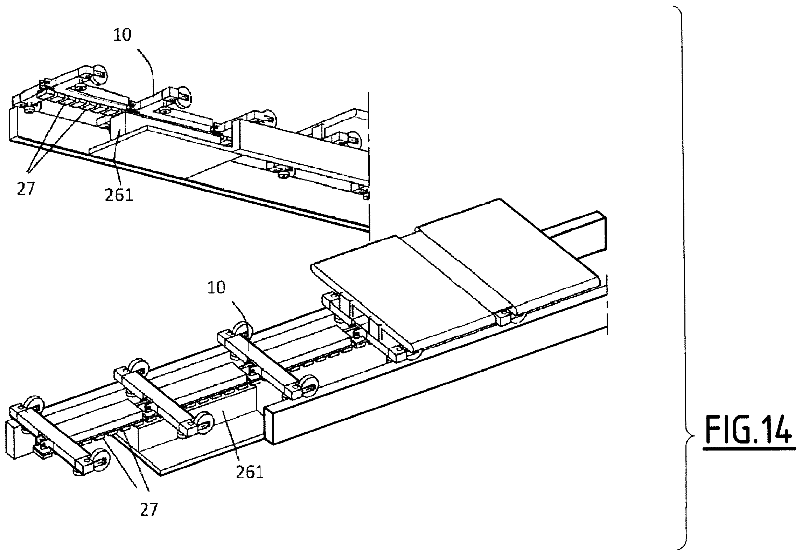

On peut aussi utiliser pour la présente invention l'entraînement linéaire synchrone pour les machines à trier, un autre système pour l'entraînement sans contact. Montré sur la figure 14, l'entraînement linéaire synchrone comprend des aimants 27 permanents disposés en pôles magnétiques alternés et à intervalles réguliers sous les chariots 10, entraînés par le champ magnétique produit dans les bobinages statoriques du groupe de propulsion 261. Le groupe de propulsion 261 au sol comprend des capteurs pour déterminer la position instantanée des aimants 27 situés sous les chariots, de sorte que l'actionnement du moteur synchrone puisse engendrer des forces de propulsion ou de freinage à intensité contrôlable, comme requis par l'invention.

L'utilisation de propulseurs dédiés 261 linéaires à induction ou de propulseurs linéaires synchrones, disposés sur les tronçons en pente et adéquatement contrôlés, permet de compenser activement les composantes des forces de gravité agissant sur les chariots, et donc d'annuler la valeur de la tension ou de la compression uniquement lorsque la machine à trier est alimentée électriquement.

Pour réduire les forces statiques engendrées par la gravité quand la machine à trier n'est pas alimentée, des roues de freinage (non représentées) sont ajoutées aux groupes propulseurs linéaires situés sur les tronçons en pente. Les roues de freinage sont préchargées de façon à agir sur les chariots 10 ou sur les lames des chariots 25, et sont dotées de freins électromagnétiques activés en désexcitation, comme cela est réalisé plus simplement dans la solution avec les entraînements de la machine à trier montrés sur les figures 4 et 5.

## Revendications

**1.** - Système de tri d'articles (7) comprenant des chariots mobiles (10) destinés à transporter lesdits articles (7) et reliés entre eux par une articulation (19, 20) le long d'une voie de roulement (1) ayant des sections situées à des niveaux d'élévation différents reliées par une ou plusieurs pentes (P) de montée et descente, un système de commande (22) et des unités d'entraînement (13) destinées à faire avancer les chariots (10) et contrôlées par le système de commande (22),
**caractérisé en ce qu'**il comprend au moins une unité de poussée dédiée (131 , 241 , 261 ) distincte des unités d'entraînement (13), présente sur au moins une des pentes (P), et contrôlée unitairement par le système de commande (22) en sorte de délivrer une force (R) pour réduire ou annuler la tension ou la compression subie par les chariots (10) au niveau des articulations (19, 20) qui serait due au poids des chariots (10) et/ou des articles (7) présents sur ladite pente (P); et **en ce que** la au moins une unité de poussée dédiée (131 , 241 , 261 ) utilise des mécanismes à friction ou linéaire sans contact à induction ou linéaire sans contact synchrone.

**2.** - Système de tri selon la revendication 1 , **caractérisé en ce que** la au moins une unité de poussée dédiée (131 , 241 , 261 ) est contrôlée par le système de commande (22) en sorte que la force (R) délivrée soit ajustée selon l'inclinaison de la pente (P).

**3.** - Système de tri selon l'une quelconque des revendications 1 et 2, **caractérisé en ce qu'**il comprend des moyens (6) aptes à déterminer le poids des articles (7) placés sur les chariots mobiles (10) et **en ce que** la au moins une unité de poussée dédiée ( 131 , 241 , 261 ) est contrôlée par le système de commande (22) en sorte que la force (R) délivrée soit fonction dudit poids.

4. - Système de tri selon l'une quelconque des revendications 1 à 3, **caractérisé en ce que** la au moins une unité de poussée dédiée (131 , 241 , 261 ) est équipée d'un système de freinage à déclenchement électromagnétique.

5. - Système de tri selon l'une quelconque des revendications 1 à 4, **caractérisé en ce que** la au moins une unité de poussée dédiée (131 , 241 , 261 ) est équipée d'au moins un moteur disposant d'un frein électromagnétique.

6. - Procédé de tri d'articles (7) par un système selon l'une quelconque des revendications précédentes, **caractérisé en ce que** le système de commande (22) détermine la valeur de la force (R) requise pour la au moins une unité de poussée dédiée (131 , 241 , 261 ) et contrôle unitairement ladite au moins une unité de poussée dédiée (131 , 241 , 261 ) en sorte qu'elle délivre la force (R) pour réduire ou annuler la tension ou la compression subie par les chariots (10) au niveau des articulations (19, 20) due au poids des chariots (10) et/ou des articles (7) présents sur la pente (P).

7. - Procédé selon la revendication 6, **caractérisé en ce que**, pour déterminer la valeur de la force (R) requise pour la au moins une unité de poussée dédiée (131 , 241 , 261 ), on attribue à chaque article (7) un poids moyen, déterminé statistiquement.

8. - Procédé selon l'une quelconque des revendications 6 et 7, **caractérisé en ce que**, pour déterminer la valeur de la force (R) requise pour la au moins une unité de poussée dédiée (131 , 241 , 261 ), on prend en compte le poids réel des articles (7) placés sur les chariots ( 10) et déterminé par les moyens (6).

9. - Procédé selon l'une quelconque des revendications 6 à 8, **caractérisé en ce que**, pour déterminer la valeur de la force (R) requise pour la au moins une unité de poussée dédiée (131 , 241 , 261 ), on prend en compte l'inclinaison de la pente (P).

10. - Procédé selon la revendication 9, **caractérisé en ce que** la force (R) calculée par le système de commande (22) est soit positive dans le cas d'une pente (P) à inclinaison positive pour limiter la traction sur les articulations (19, 20), soit négative dans une pente (P) à inclinaison négative pour limiter la pression sur les articulations (19, 20).

11. - Procédé de tri d'articles (7) selon l'une quelconque des revendications 6 à 10 , **caractérisé en ce que**, en cas d'arrêt de l'alimentation électrique de la au moins une unité de poussée dédiée (131, 241 , 261 ), l'activation du frein électromagnétique de ladite au moins une unité de poussée dédiée (131 , 241 , 261 ) annule la tension ou la compression sur les articulations (19, 20) des chariots (10) présents sur la pente (P).

**Patentansprüche**

1. System zum Sortieren von Artikeln (7), umfassend bewegliche Wagen (10) zum Transportieren der Artikel (7), die durch ein Gelenk (19, 20) entlang einer Laufbahn (1) miteinander verbunden sind, aufweisend Abschnitte, die auf unterschiedlichen Höhenniveaus angeordnet sind und durch eine oder mehrere Aufwärts- und Abwärtssteigungen (P) verbunden sind, ein Steuersystem (22) und Antriebseinheiten (13), die zum Vorschieben der Wagen (10) ausgelegt sind und durch das Steuersystem (22) gesteuert werden, **dadurch gekennzeichnet, dass** es mindestens eine von den Antriebseinheiten (13) getrennte, dedizierte Schubeinheit (131, 241, 261) umfasst, die an mindestens einer der Steigungen (P) vorhanden ist und einheitlich durch das Steuersystem (22) so gesteuert wird, dass eine Kraft (R) abgegeben wird, um die Spannung oder Kompression, die von den Wagen (10) an den Gelenken (19, 20) erfahren wird, die auf das Gewicht der an der Steigung (P) vorhandenen Wagen (10) und/oder Artikel (7) zurückzuführen ist, zu verringern oder aufzuheben, und dadurch dass die mindestens eine dedizierte Schubeinheit (131, 241, 261) Reibungsmechanismen oder Linearmechanismen ohne Induktionskontakt oder Linearmechanismen ohne Synchronkontakt verwendet.

2. Sortiersystem nach Anspruch 1, **dadurch gekennzeichnet, dass** die mindestens eine dedizierte Schubeinheit (131, 241, 261) durch das Steuersystem (22) so gesteuert wird, dass die abgegebene Kraft (R) entsprechend der Neigung der Steigung (P) eingestellt wird.

3. Sortiersystem nach einem der Ansprüche 1 und 2, **dadurch gekennzeichnet, dass** es Mittel (6) umfasst, die geeignet sind, das Gewicht der Artikel (7) zu bestimmen, die auf den beweglichen Wagen (10) angeordnet sind, und dadurch, dass die mindestens eine dedizierte Schubeinheit (131, 241, 261) durch das Steuersystem (22) so gesteuert wird, dass die abgegebene Kraft (R) von dem Gewicht abhängt.

4. Sortiersystem nach einem der Ansprüche 1 bis 3, **dadurch gekennzeichnet, dass** die mindestens eine dedizierte Schubeinheit (131, 241, 261) mit einem elektromagnetisch ausgelösten Bremssystem ausgestattet ist.

5. Sortiersystem nach einem der Ansprüche 1 bis 4, **dadurch gekennzeichnet, dass** die mindestens eine dedizierte Schubeinheit (131, 241, 261) mit mindestens einem Motor mit einer elektromagnetischen Bremse ausgestattet ist.

6. Verfahren zum Sortieren von Artikeln (7) durch ein System nach einem der vorhergehenden Ansprüche, **dadurch gekennzeichnet, dass** das Steuersystem (22) den Wert der Kraft (R) bestimmt, die für die mindestens eine dedizierte Schubeinheit (131, 241, 261) erforderlich ist, und die mindestens eine dedizierte Schubeinheit (131, 241, 261) einheitlich so steuert, dass sie die Kraft (R) abgibt, um die Spannung oder Kompression, die von den Wagen (10) an den Gelenken (19, 20) erfahren wird, die auf das Gewicht der an der Steigung (P) vorhandenen Wagen (10) und/oder Artikel (7) zurückzuführen ist, zu verringern oder aufzuheben.

7. Verfahren nach Anspruch 6, **dadurch gekennzeichnet, dass** zur Bestimmung des für die mindestens eine dedizierte Schubeinheit (131, 241, 261) erforderlichen Wertes der Kraft (R) einem jeden Artikel (7) ein statistisch ermitteltes Durchschnittsgewicht zugeordnet wird.

8. Verfahren nach einem der Ansprüche 6 und 7, **dadurch gekennzeichnet, dass** zur Bestimmung des für die mindestens eine dedizierte Schubeinheit (131, 241, 261) erforderlichen Wertes der Kraft (R), das tatsächliche Gewicht der auf den Wagen (10) angeordneten Artikel (7) berücksichtigt wird, das durch die Mittel (6) bestimmt wird.

9. Verfahren nach einem der Ansprüche 6 bis 8, **dadurch gekennzeichnet, dass** zur Bestimmung des für die mindestens eine dedizierte Schubeinheit (131, 241, 261) erforderlichen Wertes der Kraft (R) die Neigung der Steigung (P) berücksichtigt wird.

10. Verfahren nach Anspruch 9, **dadurch gekennzeichnet, dass** die von dem Steuersystem (22) berechnete Kraft (R) entweder positiv bei einer Steigung (P) mit positiver Neigung zur Begrenzung der Zugkraft an den Gelenken (19, 20) oder negativ bei einer Steigung (P) mit negativer Neigung zur Begrenzung des Drucks an den Gelenken (19, 20) ist.

11. Verfahren zum Sortieren von Artikeln (7) nach einem der Ansprüche 6 bis 10, **dadurch gekennzeichnet, dass** im Falle einer Unterbrechung der Stromversorgung der mindestens einen dedizierten Schubeinheit (131, 241, 261) die Aktivierung der elektromagnetischen Bremse der mindestens einen dedizierten Schubeinheit (131, 241, 261) die Spannung oder Kompression an den Gelenken (19, 20) der an der Steigung (P) vorhandenen Wagen (10) aufhebt.

**Claims**

1. An item sorting system (7), comprising movable carriages (10) intended for conveying said items (7) and connected together by a link (19, 20) along a travel route (1) having sections situated at different elevation levels connected by one or more ascent and descent slopes (P), a control system (22) and drive units (13) intended for advancing the carriages (10) and controlled by the control system (22), **characterised in that** it comprises at least one dedicated thrust unit (131, 241, 261) separate from the drive units (13), present on at least one of the slopes (P), and controlled in a unitary manner by the control system (22) so as to deliver a force (R) to reduce or cancel the tension or the compression to which the carriages (10) are subjected at the level of the links (19, 20) which would be due to the weight of the carriages (10) and/or of the items (7) present on said slope (P); and **in that** the at least one dedicated thrust unit (131, 241, 261) uses friction mechanisms or linear mechanisms without induction contact or linear mechanisms without synchronous contact.

2. The sorting system according to claim 1, **characterised in that** the at least one dedicated thrust unit (131, 241, 261) is controlled by the control system (22) such that the delivered force (R) is adjusted according to the tilt of the slope (P).

3. The sorting system according to any one of claims 1 and 2, **characterised in that** it comprises means (6) suitable for determining the weight of the items (7) placed on the movable carriages (10) and **in that** the at least one dedicated thrust unit (131, 241, 261) is controlled by the control system (22) such that the delivered force (R) depends on said weight.

4. The sorting system according to any one of claims 1 to 3, **characterised in that** the at least one dedicated thrust unit (131, 241, 261) is equipped with an electromagnetically tripped braking system.

5. The sorting system according to any one of claims 1 to 4, **characterised in that** the at least one dedicated thrust unit (131, 241, 261) is equipped with at least one motor having an electromagnetic brake.

6. An item sorting method (7) by a system according to any preceding claim, **characterised in that** the control system (22) determines the value of the force (R) required for the at least one dedicated thrust unit (131, 241, 261) and controls in a unitary manner said at least one dedicated thrust unit (131, 241, 261) such that it delivers the force (R) to reduce or cancel the tension or the compression to which the carriages (10) are subjected at the links (19, 20) due to the weight of the carriages (10) and/or of the items (7) present on the slope (P).

7. The method according to claim 6, **characterised in that**, to determine the value of the force (R) required for the at least one dedicated thrust unit (131, 241, 261), each item (7) is assigned an average weight, determined statistically.

8. The method according to any one of claims 6 and 7, **characterised in that**, to determine the value of the force (R) required for the at least one dedicated thrust unit (131, 241, 261), the actual weight of the items (7) placed on the carriages (10) and determined by the means (6) is taken into account.

9. The method according to any one of claims 6 to 8, **characterised in that**, to determine the value of the force (R) required for the at least one dedicated thrust unit (131, 241, 261), the tilt of the slope (P) is taken into account.

10. The method according to claim 9, **characterised in that** the force (R) calculated by the control system (22) is either positive in the case of a slope (P) with positive tilt to limit the traction on the links (19, 20) or negative in a slope (P) with negative tilt to limit the pressure on the links (19, 20).

11. The item sorting method (7) according to any one of claims 6 to 10, **characterised in that**, in the event of an interruption of the electric power supply to the at least one dedicated thrust unit (131, 241, 261), the activation of the electromagnetic brake of said at least one dedicated thrust unit (131, 241, 261) cancels the tension or the compression on the links (19, 20) of the carriages (10) present on the slope (P).

FIG.1

FIG.2

FIG.3

FIG.4

FIG.5

FIG.6

FIG.7

FIG.8

FIG.9

FIG.10

## FIG.11

FIG.12

FIG.13

FIG.14

**EP 3 105 155 B1**

## RÉFÉRENCES CITÉES DANS LA DESCRIPTION

**Documents brevets cités dans la description**

- US 20140014468 A
- US 20080234858 A
- EP 1352859 A